# EUROPEAN PATENT APPLICATION

(11) **EP 4 484 396 A1**
(43) Date of publication of application: **01.01.2025**
(21) Application number: 23181649.7
(22) Date of filing: 27.06.2023
(51) Int. Cl.: C04B 14/10, C04B 28/04

(54) **METHOD FOR MANUFACTURING COMPOSITE CEMENT**

(71) Applicant: Heidelberg Materials AG, 69120 Heidelberg (DE)
(72) Inventor: SCHADE, Tim, 44143 Dortmund (DE); SKOCEK, Jan, 69120 Heidelberg (DE); BOLTE, Gerd, 69120 Heidelberg (DE); PATO, Nicolas, 69120 Heidelberg (DE); HANAFI, Ahmed, 69120 Heidelberg (DE); MULLER, Arnaud, 69120 Heidelberg (DE)
(74) Representative: Zellentin & Partner mbB Patentanwälte

(57) **Abstract**

Composite cement comprising Portland cement, a calcium carbonate and a mechanochemically activated clay obtained by grinding a clay raw material in a ball mill or roller mill at a temperature below 150 °C until the absorbance units of the OH peak at 3600 to 3700 cm⁻¹ and the SiO₂ peak at 900 to 1000 cm⁻¹ in an FTIR spectrum decrease by at least 20 %, as well as method for manufacturing the composite cement by blending Portland cement, calcium carbonate and the mechanochemically activated clay.

## Description

The present invention relates to a method for manufacturing composite cement comprising Portland cement, calcium carbonate, and an activated clay as well as to the composite cement obtainable thereby.

The cement industry is struggling with high CO₂ emissions related to the production of cement clinker. Since the demand for cement is increasing worldwide, the emission will further increase. Consequently, there is a demand for further reduction of the emission associated with cement production. The easiest way to limit this environmental footprint is to produce composite cements or to increase the usage of supplementary cementitious material (abbreviated SCM) during the concrete production. Unfortunately, the increase of the proportion of the composite cements in the product portfolio is limited by the availability of high quality supplementary cementitious material, i.e., reactive materials resulting in appreciable strength evolution. The most often used ones are (ground) granulated blast furnace slag (abbreviated GBFS or GGBFS) and fly ash. Since they are industrial by-products from quality iron production and coal combustion, respectively, as a consequence of the decarbonation of the industry a declining availability is expected. Alternatives are needed.

Another material which may be used as SCM is calcined clay. This material is already described in cement and concrete standards like EN 197-1 or ASTM C618. To obtain good quality SCM a high-quality raw clay should be used as starting material for calcination. High-quality raw clays consisting of a few or only one clay mineral are rare in actual practice and, therefore, are too expensive because of the competition with other industry branches. With mixtures of clay minerals, it is difficult to set an optimum calcination temperature, or to put it another way, the different optimum temperatures for different clay minerals make it impossible to activate the entire raw clay. If the temperature is too low, insufficient volumes will be activated. At somewhat higher temperatures, only those minerals that react at these lower temperatures will be activated. In most cases, this fraction is still too low. Although a sufficient fraction will generally be activated at medium temperatures, some fractions of the raw clay will have already formed crystalline and therefore inert phases. Although (nearly) all fractions of the raw clay will be activated at high temperatures, most fractions will already have formed inert crystalline phases. The various clay minerals have the following optimum calcination temperatures:
- Serpentinite 400 - 500°C,
- Palygorskite 600 - 800°C,
- Kaolinite 600 - 800°C,
- Halloysite 600 - 800°C,
- Pyrophyllite 750 - 950°C,
- Montmorillonite 800 - 950°C,
- Illite 800 - 1000°C,
- Mica 650 - 1000°C.
Non-converted clay minerals have an especially high water demand and therefore must be avoided as much as possible. Further, non-converted clays would not contribute actively to the strength development in blends with Ordinary Portland cement (abbreviated OPC), composite cements would have low compressive strengths. Many raw clays are also low in Al₂O₃ content, considerable amounts of SiO₂ and other constituents such as Fe₂O₃, CaO, MgO, Na₂O and K₂O are present. For these reasons, many raw clays, which may fulfill minimum technical requirements, cannot be used economically and in certain circumstances clay-containing or clay-rich materials therefore have to be dumped.

To solve the problem of deviating optimal calcination temperatures, proposals for replacing calcination by mechanochemical activation have been made. For example, EP 3 909 682 A1 discloses a method and device for activating clay mixtures by grinding in a temperature range from 300 to 1000 °C in a roller mill. Suitable conditions for mechanochemical activation were examined by I. Tole, "Mechanical activation of clay - a novel route to sustainable cementitious binders", Licentiate Thesis, Lulea University of Technology, 2019. The Swedish clay tested therein was best activated in a ball mill with a rotational speed of 500 rpm, a balls/material ratio of 25, and grinding times of 20 minutes. While these proposals allow to activate clay without the problem of different calcination temperatures, composite cements may still show insufficient reactivity. This restricts useful replacement levels and the potential of reducing CO₂ emissions.

Thus, there is still a need for providing composite cements with adequate strength development both at early ages (1 or 2 days) and later (at 28 days) so that the carbon dioxide footprint can be reduced.

Surprisingly it was now found that a combination of mechanochemically activated clay with calcium carbonate allows the manufacturing of composite cements with adequate strength development at high clinker replacement levels of at least 25 wt.-%.

The above problem is thus solved by a method for manufacturing a composite cement comprising
- providing Portland cement,
- providing a calcium carbonate,
- providing a mechanochemically activated clay which was activated by grinding a clay raw material in a ball mill or roller mill at a temperature below 150 °C in air until the absorbance units of the OH peak at 3600 to 3700 cm⁻¹ and the SiO₂ peak at 900 to 1000 cm⁻¹ in an FTIR spectrum each decrease by at least 20 %, and
- blending the Portland cement, the calcium carbonate and the activated clay to provide the composite cement. The object is also achieved with a composite cement obtainable by the method and comprising from 45 to 80 wt.-% Portland cement, from 3 to 34 wt.-% calcium carbonate, and from 1 to 40 wt.-% mechanochemically activated clay.

The term cement designates finely ground materials which are able to harden by hydration upon mixing with water. According to the invention, the cement is Portland cement. Portland cement means ground Portland cement clinker containing a sulfate carrier and optionally up to 5 wt.-% minor constituents as allowed by standards like EN 197. To provide the Portland cement, commercially available Ordinary Portland cement (abbreviated OPC) is used, or Portland cement clinker and sulfate carrier are provided with a suitable fineness and mixed or they are co-ground with each other and/or co-ground joined or separately with one or more other components of the composite cement. Co-grinding or grinding are also applied to reduce the fineness in cases where the particle sizes of an available OPC or Portland cement clinker and/or sulfate carrier are considered too coarse. Sulfate carrier designates calcium sulfate as dihydrate, anhydrite or hemihydrate as well as other sulfates like phosphor gypsum known per se and commonly used for cement. Portland cements with fineness adapted to the desired use in a manner known per se are suitable. A Portland cement typically has a D₉₀ ≤ 90 µm, preferably ≤ 60 µm and a slope n from 0.6 to 1.4, preferably from 0.7 to 1.2, calculated by the Rosin-Rammler model. Particle sizes with a D₉₀ ≤ 1 mm are determined herein by laser granulometry with a MasterSizer (Malvern Panalytical Ltd., GB) according to the Fraunhofer theory, in isopropanol dispersion, wherein mentioned D₉₀, D₅₀ and D₁₀ values are volume based. OPC normally consists of Portland cement clinker and calcium sulfate (or less often another sulfate carrier) ground in an amount such that the Portland cement has an SOs content (XRF) of at least 2.5 wt.-%, preferably at least 3.0 wt.-%, more preferred at least 3.5 wt.-%, and usually not more than 8 wt.-%. Commercially available OPC usually contains up to 4 wt.-% SOs. This might result in less than the desired amount of SOs in the composite cement when the amount of Portland cement comprised in it is in the lower range of the preferred amounts like 45 to 50 wt.-%. The amount of SOs in the composite cement should range from 2 to 4 wt.-%, preferably from 2.5 to 3 or 3.5 wt.-%. Thus, it is envisaged to add extra sulfate carrier in case the Portland cement does not provide enough to reach those amounts.

The second component of the composite cement according to the invention is calcium carbonate. Preferred calcium carbonates are limestone, dolomite, precipitated calcium carbonate, carbonated recycled concrete paste, or a mixture of two or all of them, limestone is especially preferred. The CaCOs content of the used calcium carbonate is typically at least 40 wt.-%, preferably at least 60 wt.-%, more preferred at least 75 wt.-%, and most preferred at least 90 wt.-%. Limestone and precipitated calcium carbonate usually have a CaCOs content of ≥ 90 wt.-% or ≥ 95 wt.-% or ≥ 99 wt.-% or 100 wt.-%. Typically, the calcium carbonate is provided with a particle size distribution having a D₉₀ ≤ 200 µm, preferably D₉₀ ≤ 125 µm, determined by laser granulometry.

The third component is mechanochemically activated clay. To obtain the activated clay, a clay raw material is provided and subjected to attrition forces in a ball mill or roller mill without heating. Grinding is continued until both the OH peak at 3600 to 3700 cm⁻¹ and the SiO₂ peak at 900 to 1000 cm⁻¹ in an FTIR spectrum decrease by at least 20 % of their absorbance units, preferably by at least 25 %, most preferred by at least 30 %. The mill is usually not heated during the grinding, so that the temperature of the clay during grinding remains below 150 °C, often below 130 °C or below 110 °C. The milling introduces energy into the clay raw material which results in a reduction of the particle size and in a transformation of the crystal structure as well as a chemical transformation of the clay minerals. Specifically, the clay minerals loose water, dehydroxylate, and their BET surface decreases. During milling, the temperature of the material increases somewhat, but not more than a few dozen degree at the utmost. Therefore, a cooling is normally not necessary to avoid that the material is heated to more than 150 °C. Preferably, grinding takes place in ambient air. Specifically, the grinding atmosphere is not adjusted to bring about a reaction between it and the clay.

In case the clay raw material is too wet to be effectively ground, activated, or used in cements afterwards, it can be pre-dried. The mill can be heated to dry the material. In such a case, the temperature of the material should not exceed 150 °C, 130 °C or 110 °C. Alternatively or additionally, the clay raw material can be dried before entering the mill. Hot gas from a hot gas generator or hot flue gas or hot process gas can be used for drying before and during grinding as known per se. Suitable flue gas comes, e.g., from cement production. The raised temperature does not suffice to bring about any other changes than an evaporation of the free water wetting the surface of the particles and being present in between them as well as in internal pores of the particles. Typically, the drying results in clay raw materials with less than 4 wt.-% free water, preferably less than 2 wt.-%, most preferred less than 1 wt.-%, wherein the free water is defined as mass change upon drying to constant mass at 105 °C.

As used herein, the term clay refers to a solid material composed of clay minerals in crystalline, semi-crystalline or amorphous form and mixtures thereof. Generally, clay minerals are hydrous aluminum phyllosilicates that usually contain alkali metal, alkaline earth metal, iron, and other cations, often in considerable amounts. They are commonly divided into 1:1 and 2:1 groups such as materials belonging to the kaolin group, or the smectite group, or the vermiculite group, or mixtures thereof. In addition to the crystalline clay minerals, the designation clay minerals also covers analogous compounds in amorphous form herein.

A preferred clay raw material contains one or more of the clay minerals kaolinite, dickite, halloysite, nacrite, montmorillonite, nontronite, beidellite, saponite, illite, palygorskite, and/or sepiolite in crystalline, semi-crystalline and/or amorphous form. Preferred are clay raw materials containing kaolinite, montmorillonite, and/or illite in crystalline, semi-crystalline and/or amorphous form. Significant amounts of kaolinite, e.g., at least 10 wt.-% and preferably at least 20 wt.-% with respect to the total clay, are preferred but not necessary.

The clay raw material typically comprises clay minerals together with other minerals like quartz, feldspar, etc. Usually, the clay raw material to be used for manufacturing the mechanochemically activated clay according to the invention comprises at least 10 wt.-% clay minerals, preferably at least 15 wt.-%, more preferred at least 20 wt.-% and most preferred at least 30 wt.-%, with respect to the total clay weight. Pure clays (> 90 wt.-% clay minerals) are used by, e.g., the ceramic industry, but are less relevant for the cement industry mostly due to costs/availability issues. Also, quartz and/or feldspar present in clay raw materials enhance the mechanical activation as these minerals are hard to grind. For the present invention, clay raw material with any purity is suitable, while preferred clay raw materials have a clay mineral content < 90 wt.-%, more preferred < 85 wt.-%, and most preferred < 80 wt.-% or < 70 wt.-%. The practically, that is cost-wise, most relevant clay raw materials will contain from 20 wt.-% or 30 wt.-% to 80 wt.-% or 70 wt.-% clay minerals.

Clay raw materials are typically obtained by mining natural clay deposits. A clay raw material may be provided by mixing two or more clay raw materials mined at different locations or from the same location at different times. The mined material is crushed to provide a clay raw material with suitable particle size for milling, if necessary. Depending on the water content of the mined material the clay raw material can also be dried before and/or during the mechanochemical activation as described above.

Further, it is possible to diminish the amounts of other minerals in the clay raw material as described in WO 2022/106204 A1. Accordingly, the clay raw material can be ground before mechanochemical activation with a classification of the ground clay raw material to provide a fine fraction comprising most of the clay minerals and a coarse fraction comprising most of the quartz and/or feldspar. Due to the difference in grindability of clay minerals on the one hand and the other minerals quartz and feldspar on the other hand, a separation of the minerals is achieved by grinding with classification. The clay minerals are ground fine faster and to a much bigger extent than the quartz/felspar. The mill is combined with a classifier and the ground material is continuously passed through the classifier. The grinding time is adjusted by process parameters - feeding rate to the mill, draft through the mill - and mill setup (ball charge, number of chambers, width/length of the mill for ball mills, similar for other mills). Process parameters and mill configuration can be adjusted for the most efficient grinding process. In the classifier, a classification into a fine fraction and a coarse fraction occurs. Since the clay minerals are fine and the quartz/feldspar particles are coarse, the classification provides a fine fraction with most of the clay minerals and a coarse fraction with most of the quartz/feldspar. The mill circuits are configured in a manner known per se to provide the predetermined/desired fineness and throughput. Specifically, the grinding time, the grinding power and other parameters are adjusted such that the easy to grind clay minerals are ground finer than the harder to grind quartz and/or feldspar. Ideally, substantially all or most of the clay minerals are ground to a predetermined particle size and substantially all or most of the quartz and/or feldspar remain in a coarser particle size. A roller mill, preferably a vertical roller mill or a roller press, is specifically useful as mill, because it provides an optimal separation of the materials. The classification can be accomplished in any kind of separator, such as but not limited to in static separators, dynamic separators of 1^{st}, 2^{nd}, 3^{rd} generation, VRM separators, etc. that are known per se. As known per se it is possible to include a deagglomerator, in particular when a roller press is used. The mill output is passed into the separator where the finer and/or lighter fraction forming the recovered material in the separator is concentrated in clay minerals while the reject is enriched in quartz and/or feldspar. Typically, the recovered finer fraction is mainly - or even essentially only - clay minerals. The concentration of clay minerals in the fraction < 150 µm can range from 40 to 100 wt.-%, preferably is above 60 wt.-%, and most preferably higher than 80 wt.-%. On the other hand, the coarse product is enriched in quartz and/or feldspar. It typically contains above 50 wt.-%, preferably at least 60 wt.-%, and most preferred above 80 wt.-% quartz and/or feldspar. Of course, instead of calcination as taught in WO 2022/106204 A1 the fine fraction is activated by grinding according to the present invention. The clay raw material can be dried as described above prior to reducing the amounts of other minerals. It is further possible to use the separation by grinding and classification concurrently with the mechanochemical activation or afterwards as will be described below.

For activation, the clay raw material is subjected to attrition forces that are adjusted to achieve a loss of water as well as a dehydroxylation of the clay minerals. Grinding power and duration are set so that the OH peak at 3600 to 3700 cm⁻¹ and the SiO₂ peak at 900 to 1000 cm⁻¹ in an FTIR spectrum decrease by at least 20 % of their absorbance units, preferably by at least 25 %, most preferred by at least 30 %. With the typical grinding power of ball mills and roller mills like those used in cement manufacturing, a milling time from 2 to 60 minutes, often from 10 to 60 minutes, achieves the desired activation. As mentioned before, the temperature during grinding remains below 150 °C, even if heating is applied to concurrently dry the clay raw material. The grinding usually takes place in ambient air. When a drying is desired, air can be replaced partially (or totally) with hot gas. Other gases or gas mixtures can be used but that is not preferred because it has no benefit for the method according to the invention. Combining the mill used for mechanochemical activation with a classifier allows to separate the activated clay from other components present in the clay raw material that have a differing grindability. Especially harder to grind components like quartz and/or feldspar can be separated from the activated clay based on the different particle sizes with which they are obtained during activation by attrition forces. Thereby, the additional attrition forces exerted by hard to grind components like quartz/feldspar can be utilized without or with reduced dilution of the activated clay by such components. Furthermore, a division of the activated clay from other components that were present in the clay raw material can also be foreseen after the activation step. This can be either a grinding with classification step or some other process achieving a separation based on differing particle sizes or density. A grinding with classification is particularly useful when the activated clay is ground to reduce its particle size anyway, e.g., for use in fine cements (Blaine surfaces above 5000 or 6000 cm²/g) or very fine cements (Blaine surfaces above 7000 or 8000 cm²/g, sometimes above 10000 cm²/g). Herein, classification designates a separation of material into fractions according to particle size.

A clay activated by attrition forces has several advantages. Due to the kind of energy used there is no risk of forming crystalline high temperature phases. All clay minerals, also in clay mineral mixtures, can be activated as desired. The grinding process provides a fine material which is beneficial for reactivity. The particle size distribution of the activated clay typically has a D₉₀ < 60 µm determined by laser granulometry. Nonetheless, the BET surface is reduced analogously to the activation by calcination although the fineness increases. Thus, the mechanochemically activated clay does not have a negative influence on water demand or absorb admixtures.

The clay raw material can also be partially calcined before the mechanochemical activation which is especially useful for clay raw materials comprising two or more clay mineral types. Suitable calcination temperatures range from 400 to 1000 °C, often from 600 to 800 or 900 or 950 °C. The time needed depends on the temperature and device used as well as on the clay raw material composition and fineness. As a rule, at least 5 wt.-%, preferably at least 10 wt.-%, most preferred at least 15 wt.-%, of the clay minerals remain non-calcined, often much more like ≥ 30 wt.-% or ≥ 40 wt.-% or ≥ 50 wt.-%. In a kiln, times from 10 to 120 minutes, preferably from 30 to 60 minutes, are typically suitable. In a flash calciner shorter times from 1 to 30 seconds, often from 2 to 10 seconds, suffice. The set temperature is also often higher in flash calciners. Such a partial calcination before grinding can provide additional reactivity, i.e., the compressive strength is higher or higher cement clinker replacement levels are possible to achieve the same strength. Typically, the temperature is adjusted so that the clay mineral with the lowest calcination temperature gets calcined, preferably completely or almost completely like 80, 90, 95 or 99 wt.-% of it. Other clay minerals with higher calcination temperature are activated mechanochemically. This maximizes the overall amount of optimally activated clay minerals and brings the aforementioned additional activity. When such a mix would be only calcined at any given temperature, some of the clay minerals would either remain non-calcined or would be over-calcined, both situations resulting in lower reactivity. Another advantage is that a calcined and mechanochemically activated clay conforms to existing standards for composite cements. Clay raw materials intended for an additional calcination benefit especially from a separation of abrasive components like quartz and/or feldspar before the calcination. This saves energy for heating components which are not changed during calcination and reduces wear of the calcination device. The separated components may be added back before activation of the clay through attrition forces.

The composite cement is obtained by blending the Portland cement with the calcium carbonate, especially limestone, and the activated clay. Blending can occur in any way and device known as such. In one preferred embodiment blending of the cement with at least one of the components is combined with cement clinker grinding. Usual grinding aids can be used, especially amines like monoethanolamine, diglycolamine, diethanolamine, diisopropanolamine, methyldiethanolamine, triethanolamine, triisopropanolamine, and diethanol-isopropanolamine. A separately ground cement clinker typically has a Blaine fineness from 2000 to 10000 cm²/g, preferably from 3000 to 9000 cm²/g, most preferred from 4000 to 8000 cm²/g. The same finenesses are suitable for the composite cement according to the invention.

The preferred amounts of Portland cement, calcium carbonate and activated clay in the composite cement according to the invention are
- at least 45 wt.-% Portland cement, preferably at least 50 wt.-%, most preferred at least 65 wt.-%
- from 3 to 34 wt.-% calcium carbonate, preferably from 6 to 20 wt.-%
- from 1 to 40 wt.-% activated clay, preferably from 5 to 30 wt.-%
wherein naturally the sum of all components of one specific composite cement is always 100 wt.-%. Since further components in addition to Portland cement, calcium carbonate and activated clay are possible, their sum is less than 100 wt.-% when such further components are present. In one embodiment, the composite cement is produced from cement clinker, activated clay, limestone (or another calcium carbonate) and gypsum/anhydrite in an amount from 2-5 wt.-%, optionally plus dust from the cement production, e.g., in an amount from 0 - 5 wt.-%. Other compositions with even less Portland clinker/cement are also possible, e.g., a blend of the above-mentioned preferred composition with more calcium carbonate or another filler (e.g., 25 wt.-% cement, 30 wt.-% activated clay, 45 wt.-% calcium carbonate or calcium carbonate + another filler). Such mixes will result in lower strengths and would require using of more cement and/or lower water-to-cement ratio in the building material (e.g., concrete) to achieve a comparable performance as the mentioned preferred compositions.

In addition to Portland cement, calcium carbonate and activated clay, the composite cement according to the invention or a hydraulically hardening building material made from it may and often will contain admixtures and/or additives. Admixtures and/or additives can be added - independently from each other - while blending the cement components and/or when using the composite cement to make the hydraulic building material, e.g., mortar or concrete or hydraulic road binder.

Often used admixtures are water reducing agents and plasticizers like for example, but not exclusively, organic compounds with one or more functional group selected from carboxylate, sulfonate, phosphonate, phosphate, or alcohol. These serve to achieve a good consistency, i.e., flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements etc. Useful air entraining agents are, e.g., surface active substances, especially ones based on soaps from natural resins or synthetic nonionic and ionic surfactants.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulfonates, hydroxycarboxylic acids and their salts, phosphonates, sugars (saccharides).

It is also possible to add admixtures that are designed to modify the rheology properties, i.e., rheology modifiers like polycarboxylates, lignosulfonates, starch, Karoo gum, bentonite clay, polyvinyl alcohol, and mixtures thereof.

It is also possible to add admixtures that are designed to accelerate the evolution of the setting and/or of the compressive strength development. These can be, but are not limited to, alkaline sulfates, alkaline chlorides, or alkaline nitrates. In particular, an application of these accelerators combined with amines is beneficial. Suitable amines are for example, but not limited to, monoethanolamine, diglycolamine, diethanolamine, diisopropanolamine, methyldiethanolamine, triethanolamine, triisopropanolamine, and diethanol-isopropanolamine. Especially preferred are triethanolamine, triisopropanolamine, and diethanol-isopropanolamine. Application of other accelerators that are known in concrete technology is possible as well.

All admixtures are used in the amounts known as such, wherein the amount is adapted to a specific binder and special needs in the known manner.

Usual and useful additives are e.g., pigments, reinforcing elements, self-healing agents etc. All these can be added in the amounts known per se.

Also, one or more additional SCM, i.e., other than the activated clay, can be used. Suitable are e.g., but not limited to ground granulated blast furnace slag and other latent-hydraulic or pozzolanic slags, fly ashes both calcium rich and lean ones, burnt oil shale, natural pozzolans like volcanic ash and ground volcanic glass, artificial pozzolans, recycled concrete paste, process dusts from cement clinker manufacturing like cement kiln dust, and mixtures thereof. Preferably no other SCMs or only low total amounts thereof are added, e.g., from 1 to 30 wt.-% with respect to the composite cement, preferably from 2 to 20 wt.-%. A supplementary cementitious material is defined as a pozzolanic and/or latent hydraulic material useful to replace a part of the cement in a composite cement or as an addition to a hydraulic building material. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium hydroxide or calcium oxide and/or products of the hydraulic reaction of the ground clinker, e.g., calcium silicates liberate calcium hydroxide during hardening. Pozzolanic materials are characterized by a content of reactive silica and/or alumina which form strength providing calcium silicate hydrates and calcium aluminate hydrates, respectively, during hydration of the cement together with the calcium hydroxides liberated or another source of calcium ions. In practice, the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive, or only slightly reactive materials like limestone that substantially do not take part in the hydraulic reaction when mixed with OPC have to be clearly differentiated from SCM, with which they are sometimes summarized as mineral additions.

For use, the composite cement is transformed into a hydraulically hardening building material, e.g., into mortar or concrete or hydraulic road binder, by mixing with water. Typically, a water to binder weight ratio (w/b) from 0.1 to 1, preferably from 0.15 to 0.75, and more preferred from 0.35 to 0.65 is used. The clay activated mechanochemically according to the invention and - if applicable one or more other SCMs that are optionally added - are included into the amount of binder for calculating the w/b ratio. The mortar or concrete usually also contains aggregates as well as optionally admixtures and/or additives. Admixtures and additives have been described before and can be added to the composite cement or during mixing of the composite cement with water to form the hydraulic building material. Admixtures provided as aqueous solution or suspension are commonly added during mixing of cement and water. Hydraulically hardening building material means a wet mixture that is able to harden hydraulically and comprises a cement or binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks. Building structure denotes the hardened building material, e.g., a pre-cast concrete element or a floor or a bridge part from cast-in-place concrete.

The composite cement according to the invention is useful for all applications where ordinary Portland cement and known composite cements are used, especially concrete, mortar, hydraulic road binder, and construction chemical products such as screed, tile adhesive etc. Further, the activated clay can be added as SCM during mixing of hydraulic building materials when a composite cement comprising Portland cement and calcium carbonate, especially limestone, is used as the cement, so that all components of the composite cement according to the invention are present in the hydraulic building material. The mechanochemically activated clay is also suitable as reactive component in other types of binders such as alkali-activated binders, hybrid binders or Roman-cement type binders. While reactive, these binders cannot match the performance of Portland composite cement and hence are not a preferred option for replacing OPC.

Usually, aggregate and admixtures are added when making a hydraulically hardening building material like concrete or mortar from the composite cement according to the invention or a composite cement comprising Portland cement and calcium carbonate with addition of the clay activated according to the invention during mixing the hydraulic building material. The known aggregate and usual admixtures are used in the usual amounts. For construction chemical products like floor screed or tile adhesive, any necessary aggregate and admixture is typically added to the composite cement to form a dry mix, as far as possible. The aggregate and admixture are chosen depending on use in a manner well known per se. Further, known additives can be added.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

### Example 1

A clay raw material with a chemical composition measured by XRF of 60.39 % SiO₂, 24.45 % Al₂O₃, 2.35 % Fe₂O₃, 0.23 % CaO, 0.31 % MgO, 1.09 % TiO₂, 1.81 % K₂O, 9.34 % Loss on Ignition at 1050°C and a mineralogical composition measured by QXRD of 22.90 % quartz, 2.25 % orthoclase, 2.10 % opal, 0.90 % albite, 5.05 % microcline, 11.45 % illite, 49.40 % kaolinite, 1.10 % anatase, and 4.80 % amorphous content was ground in a ball mill with corundum balls having a diameter of 20 mm for 4 hours. The ground clay had a chemical composition measured by XRF of 45.64 % SiO₂, 36.30 % Al₂O₃, 2.39 % Fe₂O₃, 1.52 % CaO, 0.71 % MgO, 0.92 % TiO₂, 1.47 % K₂O, 10.73 % Loss on Ignition at 1050°C and a mineralogical composition measured by QXRD of 19.80 % quartz, 2.80 % andesine, 0.90 % orthoclase, 1.60 % microcline, 19.20 % corundum (presumably abrasion of the balls of the ball mill) and 55.40 % amorphous content. The specific surface area measured according to the Brunauer-Emmett-Teller (BET) theory was 21.22 m²/g for the raw clay and decreased to 17.68 m²/g for the ground clay.

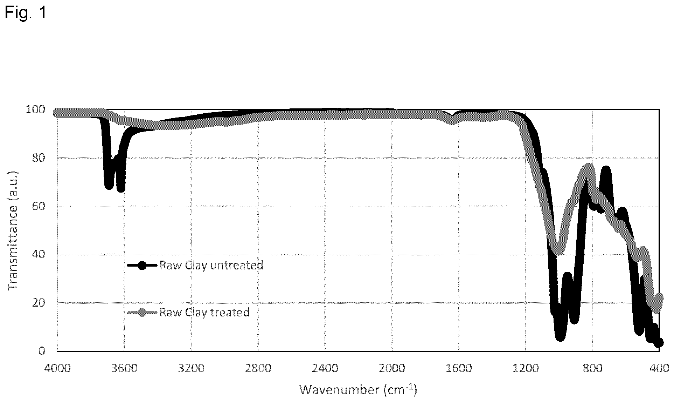

Figure 1 shows an FTIR spectrum of the clay raw material (designated Raw Clay untreated) and the mechanochemically activated clay (designated Raw Clay treated). It is readily apparent that the OH peak at 3600 to 3700 cm⁻¹ disappeared essentially completely. The SiO₂ peak at 900 to 1000 cm⁻¹ decreased by 35 % and changed in form. Both changes of the FTIR spectrum indicate that the clay raw material lost water and was significantly dehydroxylated.

Mortar samples were made from a CEM I 52.5 R with 5 wt.-% limestone and 20 wt.-% clay. Sample Inv1 contained the clay activated according to the invention, sample OPC contained only the CEM I 52.5 R, and sample Comp1 contained the clay raw material. A calcined clay was used in sample Comp2, a calcined and mechanochemically activated clay in sample Inv2. The clay raw material was calcined at 800 °C for 60 minutes to obtain sample Comp2 and the input material for mechanochemical activation for sample Inv2.

The mortar samples contained sand in a weight ratio cement/sand of 1:3 and were mixed with water at a w/b ratio of 0.50. Table 1 shows the strength development of the mortar samples measured as defined in EN 196-1.

**Table 1: Compressive strength measured according to EN 196-1**

| sample | compressive strength after | | | |
|---|---|---|---|---|
| | 1 day | 2 days | 7 days | 28 days |
| OPC | 30.7 | 43.8 | 58.3 | 64.2 |
| Comp1 | 23.5 | 35.3 | 46.2 | 49.2 |
| Inv1 | 13.1 | 31.4 | 58.1 | 66.1 |
| Comp2 | 20.5 | 34.7 | 53 | 63.4 |
| Inv2 | 18.8 | 34.7 | 56.4 | 74.5 |

It is apparent that the composite cement according to the invention, sample Inv1, reached the same strength as the pure OPC after 7 days and surpassed the strength of it after 28 days. The composite cement with raw clay, sample Comp1, had a higher strength than the composite cement according to the invention at early ages of 1 and 2 days, but at 7 and 28 days the strength increase was low, and the absolute strength achieved was much lower than that of the OPC. From table 1 it is also apparent that a composite cement with calcined and mechanochemically activated clay, Inv2, exceeded the strength of a composite cement made from conventional calcined clay material, sample Comp2, already after 7 days.

Thus, combining a mechanochemically activated clay with calcium carbonate allows a significant replacement of clinker in composite cements without a loss of compressive strength developed after 7 and 28 days. A calcination before the mechanochemical activation can be applied. It allows even higher replacement levels or provides especially reactive cements. Also, it ensures that a composite cement according to the invention falls within the existing standards allowing calcined clay as component.

### Example 2

A raw material composed of 30 wt.-% quartz, 40 wt.-% kaolinite and 30 wt.-% illite is available as well as a flash calciner. Illite and kaolinite should be calcined in different temperature ranges, using flash calciner at any given temperature cannot result in optimal calcination of both clay minerals. Calcining the raw material at the optimum temperature for kaolinite yields an intermediate material with mostly calcined kaolinite but almost non-calcined illite. It is expected that about 90 to 99 wt.-% of the kaolinite are calcined while not more than about 1 to 30 wt.-% of the illite are calcined. Thus, the calcined material contains from 21.4 to 33.7 wt.-% non-calcined clay minerals and from 36.3 to 48.6 wt.-% calcined clay minerals. This intermediate material is then activated using mechanochemical treatment according to the invention, resulting in final material with kaolinite activated thermally and illite mechanically. Such material has higher reactivity than a material calcined at any given temperature.

## Claims

1. Composite cement comprising Portland cement, a calcium carbonate and a mechanochemically activated clay, wherein a clay raw material was activated by grinding in a ball mill or roller mill at a temperature ≤ 150 °C until the absorbance units of the OH peak at 3600 to 3700 cm⁻¹ and the SiO₂ peak at 900 to 1000 cm⁻¹ in an FTIR spectrum decrease by at least 20 % to provide the mechanochemically activated clay.

2. Composite cement according to claim 1, wherein the composite cement comprises
- at least 45 wt.-% Portland cement, preferably at least 50 wt.-%, most preferred at least 65 wt.-%
- from 3 to 34 wt.-% calcium carbonate(s), preferably from 6 to 20 wt.-%
- from 1 to 40 wt.-% activated clay, preferably from 5 to 30 wt.-%.

3. Composite cement according to claim 1 or 2, wherein the calcium carbonate is limestone, dolomite, precipitated calcium carbonate, carbonated recycled concrete paste, or a mixture of two or all of them, especially limestone, and/or the CaCOs content of the calcium carbonate is at least 40 wt.-%, preferably at least 60 wt.-%, more preferred at least 75 wt.-%, and most preferred at least 90 wt.-%.

4. Composite cement according to any one of claims 1 to 3, wherein the clay raw material comprises at least 10 wt.-% clay minerals, preferably at least 15 wt.-%, more preferred at least 20 wt.-%, most preferred at last 30 wt.-%, and/or up to 90 wt.-%, preferably up to 85 wt.-%, more preferred up to 80 wt.-%, most preferred up to 70 wt.-%, clay minerals with respect to the total clay raw material weight.

5. Composite cement according to any one of claims 1 to 4, wherein the composite cement comprises one or more additional supplementary cementitious materials, preferably selected from ground granulated blast furnace slag and other latent-hydraulic or pozzolanic slags, fly ashes both calcium rich and lean ones, burnt oil shale, natural pozzolans like volcanic ash and ground volcanic glass, artificial pozzolans, recycled concrete paste, process dusts from cement clinker manufacturing like cement kiln dust, and mixtures thereof and/or the composite cement or a hydraulically hardening building material made from it contains admixtures and/or additives.

6. Method for manufacturing a composite cement comprising the steps
- providing Portland cement,
- providing a calcium carbonate,
- manufacturing activated clay by grinding a clay raw material in a ball mill or roller mill at a temperature ≤ 150 °C until the absorbance units of the OH peak at 3600 to 3700 cm⁻¹ and the SiO₂ peak at 900 to 1000 cm⁻¹ in an FTIR spectrum decrease by at least 20 %,
- blending the Portland cement with the calcium carbonate and the activated clay.

7. Method according to claim 6, wherein the clay raw material is ground until the absorbance units of the OH peak and the SiO₂ peak decrease by at least 25 %, preferably by at least 30 %.

8. Method according to claim 6 or 7, wherein the temperature during grinding remains below 130 °C, preferably below 110 °C and/or grinding takes place in air.

9. Method according to any one of claims 6 to 8, wherein the mill is not additionally heated during grinding and/or the mill is not cooled during grinding.

10. Method according to any one of claims 6 to 8, wherein the clay raw material is dried to a free water content of 4 wt.%, preferably less than 2 wt.-%, most preferred less than 1 wt.-%, before grinding or during grinding.

11. Method according to claim 10, wherein the clay raw material is dried during grinding by introducing a hot gas, preferably an exhaust gas, most preferred an exhaust gas from cement manufacturing, into the mill, wherein the temperature of the clay raw material in the mill remains below 150 °C.

12. Method according to any one of claims 6 to 11, wherein a clay raw material comprising one or more of kaolinite, dickite, halloysite, nacrite, montmorillonite, nontronite, beidellite, saponite, illite, palygorskite, and/or sepiolite is used.

13. Method according to any one of claims 6 to 12, wherein the clay raw material is partially calcined before grinding, preferably at a temperature from 400 to 1000 °C, either for 10 to 120 minutes in a kiln or for 1 to 30 seconds in a flash calciner, so that of clay minerals contained in the clay raw material at least 5 wt.-%, preferably at least 10 wt.-% and most preferred at least 15 wt.-% remain non-calcined in the calcined clay raw material.

14. Method according to any one of claims 6 to 13, wherein providing the Portland cement comprises grinding a Portland cement clinker and/or a sulfate carrier and mixing them.

15. Method according to claim 14, wherein blending Portland cement, calcium carbonate and mechanochemically activated clay is combined with grinding Portland cement clinker or sulfate carrier or both or blending is combined with grinding the Portland cement and/or the calcium carbonate.
